(19) **Europäisches Patentamt / European Patent Office / Office européen des brevets**

(11) **EP 1 829 497 B1**

(12) **EUROPEAN PATENT SPECIFICATION**

(45) Date of publication and mention
of the grant of the patent:
**14.04.2010 Bulletin 2010/15**

(51) Int Cl.:
**A61C 5/02** (2006.01)

(21) Application number: **07250839.3**

(22) Date of filing: **28.02.2007**

(54) **An endodontic file having a taper defined by a continously changing concavity**

Wurzelkanalfeile mit durch einen kontinuierlich wechselnden Hohlraum definierter Abschrägung

Fichier d'endodontie comportant une bande définie par une concavité constamment modifiée

(84) Designated Contracting States:
**AT BE BG CH CY CZ DE DK EE ES FI FR GB GR HU IE IS IT LI LT LU LV MC NL PL PT RO SE SI SK TR**

(30) Priority: **03.03.2006 US 367634**

(43) Date of publication of application:
**05.09.2007 Bulletin 2007/36**

(73) Proprietor: **Johnson, William B.**
**Tulsa, OK 74114 (US)**

(72) Inventor: **Lynch, Robert P.**
**Tulsa, Oklahoma 74133 (US)**

(74) Representative: **Pluckrose, Anthony William**
**Boult Wade Tennant**
**Verulam Gardens**
**70 Gray's Inn Road**
**London WC1X 8BT (GB)**

(56) References cited:
**EP-A2- 0 780 099       FR-A1- 2 854 054**
**US-A1- 2006 228 668    US-A1- 2007 026 360**

EP 1 829 497 B1

**Description**

**REFERENCE TO PENDING APPLICATIONS**

This application is not based upon any pending domestic or international patent applications.

**REFERENCE TO MICROFICHE APPENDIX**

This application is not referenced in any microfiche appendix.

**BACKGROUND OF THE INVENTION**

1. **Field Of The Invention.** This invention relates to a flexible tool that is particularly adaptable for use as an endodontic instrument, most particularly, an endodontic file for use by practitioners in removing the pulpal material from an exposed root of a tooth and for shaping the root canal to receive filler material, such as gutta-percha.

2. **Background Of The Invention.** One of the most significant advancements in dentistry in recent years has been improved treatment of abscessed teeth. In the past a tooth, once abscessed, was usually pulled as the only remedy for alleviating the intense pain. By "abscessed" usually means that the root canal of the tooth becomes infected and the infection causes pressure on the tooth and the nerve endings associated therewith that result in, sometimes, almost unbearable pain. With the advent of endodontics the drastic measure of extracting a tooth that had become abscessed has been eliminated.

The first step in the endodontic treatment of an abscessed tooth is to drill an opening in the crown of the tooth to provide access to the root canal. Once the root canal is exposed, the practitioner then must thoroughly clean the root canal of pulpal material since if the pulpal material is not thoroughly and carefully removed it can be the source of continued infection. Not only is it necessary that the pulpal material be removed but the root canal usually must be shaped in such a way as to permit filling of the root canal with a filler material. While other types of filler materials have been provided still at the present time the most common filler is a paste-like material referred to as "gutta-percha." If the canal is not properly cleaned and shaped the step of filling with gutta-percha may leave void areas that invite the introduction into the root canal of organic matter that can be followed by bacterial action. For these reasons much of the effort of a practitioner to successfully accomplish the endodontic treatment of an abscessed tooth is the cleaning and shaping of the root canal. These steps are accomplished utilizing small diameter tapered files that are inserted by the practitioner through the exposed crown area into the root canal. The canal must be cleaned from the crownal area advancing to the root apex.

A root canal is typically in a tapered configuration, that is, the cross-sectional area of canals is usually greater near the crown of the tooth and is at a minimum at the apex of the tooth, that is, the distal end of the root canal. While the root canal is naturally tapered it is not tapered symmetrically and the canal can have inclusions in intermediate portions between the apex and the crown area that interfere with the passage of filler material. Therefore the root canal must be shaped to remove unnecessary intrusions and to improve the chances that the practitioner can successfully fill the root canal.

Files are usually provided either with a small cylindrical plastic handle portion by which the practitioner manually rotates the files or a shank portion that can be received in the chuck of a dental hand piece by which they are mechanically rotated. In addition to rotation, the practitioner manipulates the files in and out of root canals. "Manipulation" means inserting a file into a canal and reciprocating it to file away intrusions and at the same time to remove pulpal material. Typically the practitioner inserts a file to the point of resistance and then rotates and reciprocates the file to engage spiral scraping edges with the canal wall. The file is then extracted to remove pulpal material and matter scraped from the wall. This procedure is repeated as necessary to clean the entire length of the canal. In the cleaning process the practitioner usually starts with a file of a small diameter and then, as progress is made in cleaning the canal, larger diameter files are employed until the root canal is shaped and cleaned to the apex. Accordingly, endodontic files usually come in sets of standard tapers and varying from smaller to larger diameters. As previously stated, instead of manually rotating an endodontic file the practitioner may insert the file proximal end into the chuck of a hand piece by which the file is mechanically rotated.

Root canals are characteristically not straight. Some root canals curve more than others but few are perfectly straight from the crown to the apex. Therefore it is important that files be flexible so as to be able to follow the natural curvature of the root canal as it is cleaned and shaped from the tooth crown to the tooth apex. If a file is too stiff it can result in the file protruding through a side wall of a tooth root which can introduce an avenue of infection into the tooth. Further, if the file is stiff it is less successful in cleaning the entire area of a canal since the stiffness will cause the file to be deflected drastically to one side of a curve in a canal leaving a portion of the wall that defines the curve unexposed to the action of the file. Therefore, a high degree of flexibility is a desirable characteristic of an endodontic file.

In addition, the strength of a file is very important. In the process of reciprocating and rotating a file in a tooth it is possible for the file to break, leaving a broken part in the tooth. This creates a serious problem for the practitioner. Accordingly, it has long been a desire of the dental profession to have available dental files that are highly flexible and yet strong to resist separation as a result of a torsional twist or pulling action as a file is manipulated within a root canal. The present invention provides a way of substantially increasing the flexibility of dental files while at the same time increasing resistance against torsional or elongational separation.

3. **Description Of The Prior Art.** For background information relating to the subject matter of this invention and specifically relating to dental reamer / files, reference may be had to the following issued United States patents and publications:

| PATENT NUMBER | INVENTOR(S) | ISSUE DATE | TITLE |
| --- | --- | --- | --- |
| 1,067,015 | Fowler | 07/08/1913 | Dental Broach |
| 1,307,446 | Kerr | 06/24/1919 | Dental Instrument |
| 2,902,763 | Heppe | 09/08/1959 | Dental Finishing Tool, Especially For Interproximal Work |
| 4,260,379 | Groves et al. | 04/07/1981 | Endodontic Instrument |
| 4,443,193 | Roane | 04117/1984 | Endodontic Instrument |
| 4,536,159 | Roane | 08/20/1985 | Endodontic Instrument |
| 4,538,989 | Apairo, Jr. et al. | 09/03/1985 | Dental Reamer |
| 4,738,616 | Reynaud | 04/19/1988 | Assembly Constituted By A Drill And A Tenon For Anchoring Dental Prosthesis Adapted To Be Fixed In The Root Of A Tooth |
| 4,836,780 | Buchanan | 06/06/1989 | Anti-Curvature Dental Root Canal. Shaping File |
| 4,934,934 | Arpaio, Jr. et al. | 06/19/1990 | Dental File/Reamer Instrument |
| 4,971,556 | Ritano | 11/20/1990 | Endodontistry Bit Set |
| 5,017,137 | Weissman | 05/21/1991 | Dental Tool Reamer Capable Of Following Natural Curvature Of Tooth Canal |
| 5,017,138 | Schilder | 05/21/1991 | Set of Endodontic Instruments |
| 5,026,284 | Martin | 06/25/1991 | Apex Root Canal File |
| 5,219,284 | Velvart et al. | 06/15/1993 | Set of Instruments For Reaming Out Dental Root Canals |
| 5,257,934 | Cossellu | 11/02/1993 | Endodontic Instrument For Preparing The Root Canal |
| 5,380,200 | Heath et al. | 01/10/1995 | Endodontic Instrument Of Predetermined Flexibility |
| 5,464,362 | Heath et al. | 11/07/1995 | Endodontic Instrument |
| 5,503,554 | Schoeffel | 04/02/1996 | Endodontic Files |
| 5,658,145 | Maillefer et al. | 08/19/1997 | Set Of Instruments For Boring Dental Radicular Canals And Method Therefor |
| 5,676,541 | Maillefer et al. | 10/14/1997 | Set of Instruments of Increasing Dimension For The Boring of Radicular Dental Canals |
| 5,692,902 | Aeby | 12/02/1997 | Set Of Instruments For The Boring Of Radicular Dental Canals |
| 5,735,689 | McSpadden | 04/07/1998 | Endodontic Dental Instrument |
| 5,746,597 | Maillefer et al. | 05/05/1998 | Instrument For Boring Dental Radicular Canals |
| 5,842,862 | Nissan | 12/01/1998 | Endodontic Tool |
| 5,873,719 | Calas et al. | 02/23/1999 | Dental Reamer |
| 5,897,316 | Buchanan | 04/27/1999 | Endodontic Treatment System |
| 5,902,106 | McSpadden | OS/11/1999 | Endodontic Dental Instrument |
| 5,921,775 | Buchanan | 07/13/1999 | Endodontic Treatment System |
| S,938,440 | McSpadden | 08/17/1999 | Endodontic Instrument |
| 5,941,760 | Heath et al. | 08/24/1999 | Endodontic Instrument |
| 5,975,899 | Badoz et al. | 11/02/1999 | Dental Reamer |

(continued)

| PATENT NUMBER | INVENTOR(S) | ISSUE DATE | TITLE |
|---|---|---|---|
| 5,980,250 | McSpadden | 11/09/1999 | Endodontic Instrument |
| 6,012,921 | Riitano | 01/11/2000 | Endodontic Systems For The Anatomical, Sectional And Progressive Corono-Apical Preparation Of Root Canals With Three Sets Of Dedicated Instruments |
| 6,074,209 | Johnson | 06/13/2000 | Reduced Torque Endodontic File |
| 6,217,335 | Riitano et al. | 04/17/2001 | Endodontic Systems And Methods For The Anatomicall, Sectional And Progressive Corono-Apical Preparation Of Root Canals With Minimal Apical Intrusion |
| 6,267,592 | Mays | 07/31/2001 | Highly Flexible Instrument For Dental Applications |
| 6,296,485 | Danger | 10/02/2001 | Finisher Set |
| 6,299,445 | Garman | 10/09/2001 | Endodontic Instrument, Instrument Blank and Method of Manufacture |
| 6,312,261 | Mays | 11/06/2001 | Endodontic Obturator With Removable Carrier And Method Of Use Thereof |
| 6,315,558 | Farzin-Nia et al. | 11/13/2001 | Method Of Manufacturing Superelastic Endodontic Files And Files Made Therefrom |
| 6,390,819 | Riitano | 05/21/2002 | Endodontic Systems And Methods For The Anatomical, Sectional And Progressive Corono-Apical Preparation Of Root Canals With Dedicated Stainless Steel Instruments And Dedicated Nickel/Titanium Instruments |
| 6,419,488 | McSpadden et al. | 07/16/2002 | Endodontic Instrument Having A Chisel Tip |
| 6,443,730 | Davidson | 09/03/2002 | Break-Resistant Composite Endodontic ' Instrument |
| 6,514,076 | Bleiweiss et al. | 02/04/2003 | Precipitation Hardenable Stainless Steel Endodontic Instruments And Methods For Manufacturing And Using The Instruments |
| 6,520,774 | Mays | 02/18/2003 | Highly Flexible Instrument For Medical Applications |
| 6,644,972 | Mays | 11/11/2003 | Endodontic Obturator With Removable Carrier And Method Of Use Thereof |
| 6,712,611 | Garman | 03/30/2004 | Endodontic Instrument With Controlled Flexibility and Method of Manufacturing Same |
| 6,746,245 | Riitano et al. | 06/08/2004 | Methods For Cleaning And Shaping Asymmetrical Root Canals In An Anatomical Fashion |
| 2003/0077553 | Brock | 04/24/2003 | Endodontic Instrument Having Notched Cutting Surfaces |
| 2004/0146832 | Lampert | 07/29/2004 | Endodontic Instrument and Instrument System |
| 2004/0121283 | Mason | 06/24/2004 | Precision Cast Dental Instrument |
| 2004/0058297 | Danger | 03/02/2004 | Root Canal Instrument |
| 2004/0043357 | Garman | 03/04/2004 | Endodontic Instrument |
| 2004/0023186 | McSpadden | 02/05/2004 | Multi-Tapered Endodontic File |
| Re. 34,439 | Heath | 11/09/1993 | Dental Compactor Instrument |
| EP0780099 A2 | Maillefer Instruments S.A. | 25.06 1997 | |

BRIEF SUMMARY OF THE INVENTION

The invention herein is a dental reamer/file that is for use in performing endodontic procedures, that is, specifically, cleaning and shaping the root canal of a tooth to prepare the tooth to receive filler material, such as gutta percha.

There is provided a dental instrument for endodontic applications comprising:

an elongated shaft having a proximal end (12) and a reduced diameter distal end (16) and a tapered working portion (14) extending from said proximal to said distal end (16), the shaft working portion (14) having at least one cutting/ scraping edge (22), the taper of the shaft working portion (14) being defined by an initial relatively large radius of concavity (R) at said distal end (16) and of continually reduced radius of concavity (R) terminating in a final relatively small radius of concavity (R) adjacent said proximal end (12); characterised in that
said continually reduced radius of concavity (R) varies with substantial elliptical conformity.

The file of this invention may be manipulated manually or by machine, that is, a hand piece that is commonly used by endodontic practitioners. The file includes an elongated shaft with a proximal end, a distal end and a tapered working portion that extends from the proximal portion to the distal end. The shaft also includes either an enlarged diameter handle portion, typically made of plastic for manually manipulating the file or a smaller diameter cylindrical stem metal portion, usually integral with the file, that is configured to be received in the chuck of a dental hand piece by which the file is mechanically rotated and can be manipulated by the practitioner.

The external surface of the shaft working portion is defined by a plurality of at least one spaced apart continuous flutes. These flutes are formed into a central core portion of the shaft. The flutes have therebetween an equal number of spaced apart flanges.

Each of the flanges has a helicoidal cutting/scraping edge that extends from near the proximal end of the shaft working portion to the distal end. In one embodiment the shaft working portion is tapered in an arrangement beginning at the shaft distal end in which the taper is defined by a constant radius of concavity. In another embodiment, the shaft taper is concave from the distal end to adjacent the proximal end and the radius of concavity begins with a relatively large radius of concavity and continually decreases, terminating in a relatively smaller radius of concavity adjacent the proximal end of the shaft. In still a different embodiment the shaft taper is concave from the distal end to adjacent the proximal end and the radius of concavity varies in substantial elliptical conformity.

A better understanding of the invention will be obtained from the following detailed description of the preferred embodiments and claims, taken in conjunction with the attached drawings.

**BRIEF DESCRIPTION OF THE DRAWINGS**

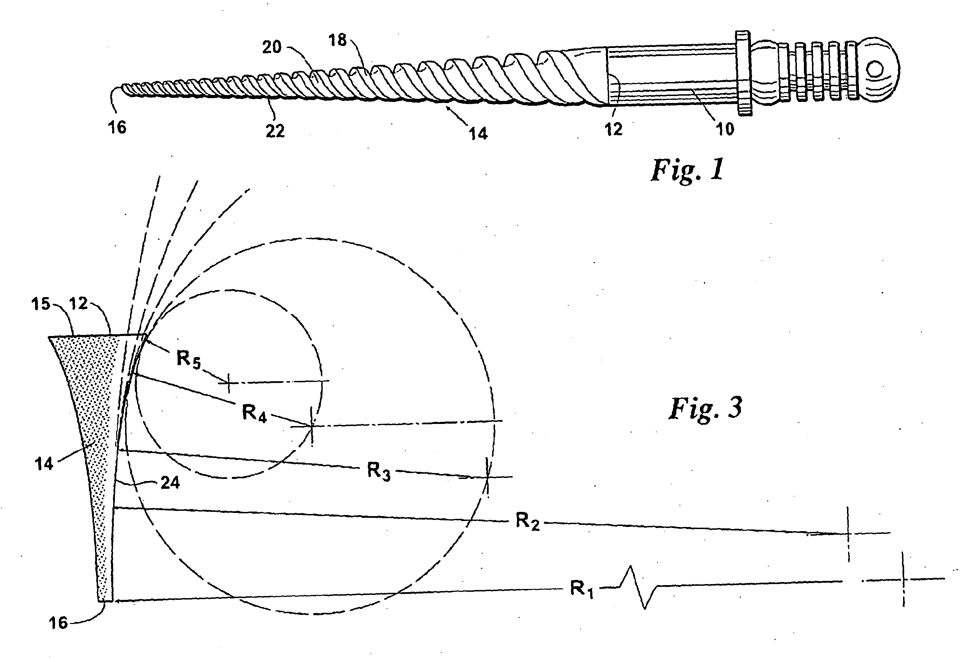

Figure 1 is an elevational view of an endodontic file of the type that can be used to incorporate the principles of this invention. The file illustrated in Figure 1 is the type for insertion into the chuck of a dental hand piece by which the file is mechanically rotated. That is, the file of Figure 1 has an integral cylindrical stem at the proximal end that is receivable in a chuck. Extending from the cylindrical stem is the file shaft having a working portion that terminates in a minimal diameter at a distant end. The external shape of the working portion of the shaft continually decreases in diameter in a way that the taper is defined by a radius of concavity.

Figure 2, not forming part of the present invention, is a series of elevational diagrammatic illustrations of the working portion of files with tapers that are each of a constant radius of concavity and wherein the radius of concavity decreases from one file to another.

Figure 2A, not forming part of the present invention, is a series of elevational diagrammatic illustrations of the working portions of files in which the major portions have tapers that are each of a constant radius of concavity, and wherein the radius of concavity decreases from one file to another. In this figure the working portion of each file terminates at its distal end with a reducing diameter portion that forms a rounded point.

Figure 3, not forming part of the present invention, shows diagrammatically a file having a continually decreasing radius of concavity from the distal end towards the proximal end.

Figure 4 shows diagrammatically the shape of the working portion of a file with a taper that varies with substantial elliptical conformity.

Figure 5 shows another embodiment of the working portion of a file having the same concept as the file of Figure 4 wherein the ellipses defining the file basic shape follows ellipses each having a flatter ovality than in Figure 4.

Figure 6 is a profile view of the working portion of an endodontic file having a portion extending from the file distal end towards the file stem in which the working portion geometry transcends from an elliptically configured portion to a cylindrical or frusto-conical shaped portion.

**DETAILED DESCRIPTION OF THE PREFERRED EMBODIMENTS**

It is to be understood that the invention that is now to be described is not limited in its application to the details of the construction and arrangement of the parts illustrated in the accompanying drawings. The invention is capable of other embodiments and of being practiced or carried out in a variety of ways. The phraseology and terminology employed herein are for purposes of description and not limitation.

Elements illustrated in the drawings are identified by the following numbers:

| 10 | Cylindrical stem | 24 | External tapered shape |
|----|------------------|----|------------------------|
| 12 | Proximal end | 26 | Convex taper |
| 14 | Shaft working portion | 28A, B | Ellipses |
| 15 | Shaft active portion proximal end | 30A, B | Focal points of ellipses 28A, B |
| 16 | Distal end | 32A, B | Ellipses |
| 18 | Helical flutes | 34A, B | Focal points of ellipses 32A, B |
| 20 | Helical flanges | 36 | Shape change demarcation |
| 22 | Helical cutting / scraping edges | 38 | Secondary shaped surface |

Figure 1 is an elongated elevational view of a typical endodontic file for use by practitioners for cleaning and shaping the root canal of a human tooth. The file illustrated in Figure 1 includes a cylindrical stem portion 10 that is typically integral with and extends from the proximal end 12 of a file shaft working portion generally indicated by the numeral 14. Working portion 14 begins with the proximal end 12 and terminates in a reduced diameter and usually pointed distal end 16. On the external surface of the shaft working portion 12 is a plurality of at least one helical flutes 18 that have, between adjacent flutes, a helical flange portions 20. Each helical flange 20 includes at least one helicoidal cutting / scraping edge.

The file discussed to this point is prior art, that is, it is typical of endodontic files employed by endodontists or other dental practitioners for cleaning and shaping the root canal of a tooth in the process of treating an abscessed tooth by removal of the infected nerve tissue. In the typical endodontic procedure, the practitioner first forms a hole in the crown of a tooth to communicate with the root canal and then employs one or more endodontic files to carefully clean the root canal of pulpal material that usually is infected, that is, abscessed. As this pulpal material is removed as thoroughly as possible files are also used to shape the root canal so as to permit it to be successfully filled with filler material, such as, by example, gutta percha. After the root canal has been cleaned and filled the opening in the crown is repaired to complete the endodontic procedure.

Files such as illustrated in Figure 1, that is by way of example only, typically are of small diameter at the distal end 16 and taper in the direction towards the proximal end 12. Files may taper in a variety of ways, such as linearly, that is wherein the diameter of the file increases arithmetically in which case the diameter varies in direct proportion to the length from the distal end. The invention herein lies in an improved method or system of selecting the rate of change of diameter of the file moving from the distal towards the proximal end. Stated another way, the invention herein is a unique taper configuration for endodontic files.

The invention herein relates to the arrangement of the taper of the file which is essentially the changing diameters of the file, diameters being measured at the helical cutting / scraping edge.

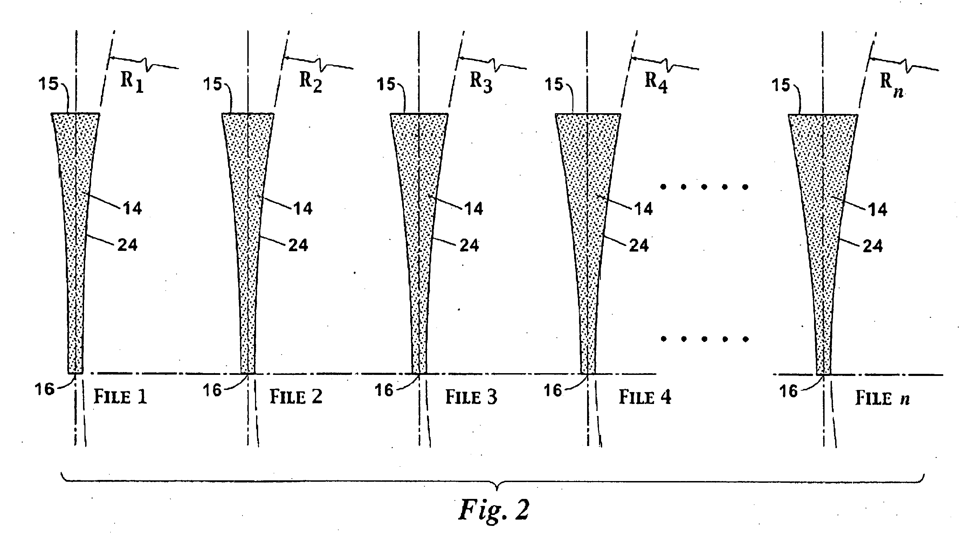

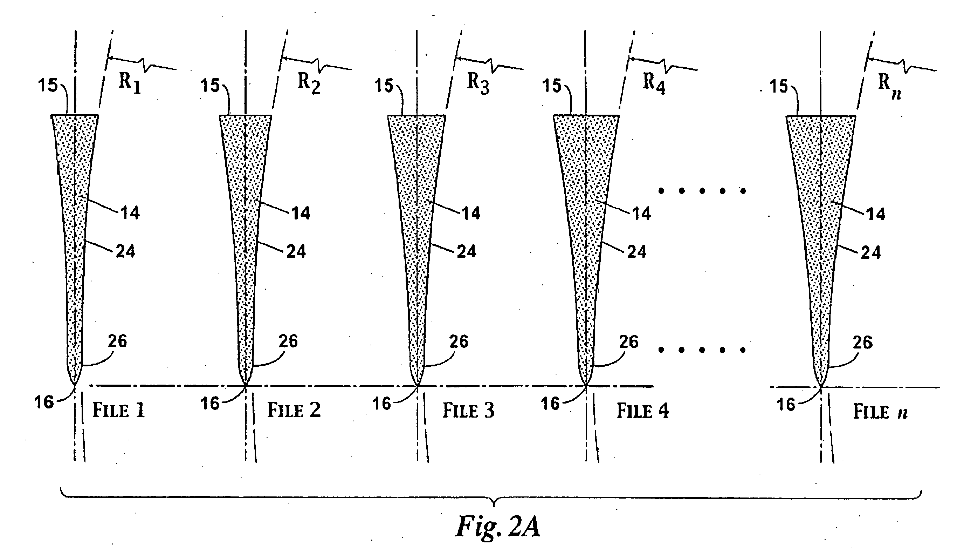

Referring to Figure 2, an embodiment not forming part of the present invention is illustrated. In this embodiment each of the shaft working portions 14 (identified as File 1, File 2, File 3, File 4 and File $n$) has an external shape 24 defined by a constant radius of concavity.

As an example, File 1 has a radius of concavity $R_1$, File 2 has a radius of concavity $R_2$, etc. Each file has an increasingly shorter radius of concavity.

Endodontic files are frequently designed as sets. In shaping a root canal an endodontist usually uses files of different basic diameters in completing the work on each root canal. In one method, called the "step back" or "sequential enlargement" technique, the practitioner usually starts with a smaller diameter file and selects larger diameter files as the root canal is shaped to receive filler material. Figure 2 is an example of a set of endodontic files according to this invention in which each of the files in the set has a taper defined by a radius of taper and wherein the radii vary through a selected range from a longer radius to provide File 1 to a shorter radius to provide File $n$. A shorter radius of taper provides a file in which the working portion is larger in diameter adjacent the proximal end.

In another method, called the "crown down" technique, the practitioner starts with a file having a larger diameter of the working portion adjacent the proximal end, such as File $n$ seen in Figure 2 or 2A. After the root canal is widened in the crown area, files having smaller diameters adjacent the proximal end, such as Files 4 or 3 in Figure 2 or 2A are employed to reach further into the root canal. In this technique the last file used may be File 1 in Figures 2 or 2A, to clean the root canal to its apical end.

Figure 3 shows an alternate embodiment not forming part of the invention wherein the external tapered shape 24 of a file shaft working portion 14 is defined by an initially, relatively large radius of concavity at the file distal end 16 and a continually reduced radius of concavity terminating at the file proximal end 12 in a final relatively small radius of concavity. Figure 3 shows an initial radius of concavity of $R_1$ at the working portion distal end 16. About midway of the length of the shaft working portion 14 the radius of concavity is $\dfrac{R_1}{4}$. At the shaft proximal end 12 the radius of concavity is $\dfrac{R_1}{n}$. The radius of concavity reduces continually, not in steps and can vary arithmetically, exponentially or in other structured ways.

The final diameter of the file working portion at proximal end 12 can be determined by $R_1$ or by the rate of change of the radii of concavity permitting sets of files to be made incorporating the principles of Figure 3.

Figure 2A shows the working portions (diagrammatically) of a series or a set of files in which a major portion of the length of the shaft working portion of each file has a taper defined by a fixed radius of concavity and in which a minor portion of the length of the shaft working portion of each file, at its distal end terminates with reducing diameters that form a rounded point.

Figure 2A shows a set of five shaft working portions 14 each with helical flutes and flanges, not seen, providing helical cutting / scraping edges, not seen, and wherein the shaft working portions 14 each have an external tapered shape 24 extending from each shaft's active portion proximal end 15 to approximate its distal end 16. Adjacent each distal end 16 each shaft working portion 14 has, for a relatively short length, a convex taper 26 curving to a point at distal end 16. This convex taper 26 helps guide the file through the lower portions of a root canal to the canal apex.

Thus, it can be seen that in the embodiment of Figures 2 and 2A the shape of each file is a constant radius of concavity whereas in the embodiment of Figure 3 the shape of the file is a constantly decreasing radius of concavity. A file employing the principles of this invention tends to produce a root canal having a funnel shape that is susceptible of being more fully and completely filled by filler material than is the case when files are employed that produce sudden changes in the diameter of the root canal. Stated another way, the shape of a root canal achieved by one of Files 1 through Files $n$ is less likely to have internal ledges that could impede effective filling of the canal with filling material.

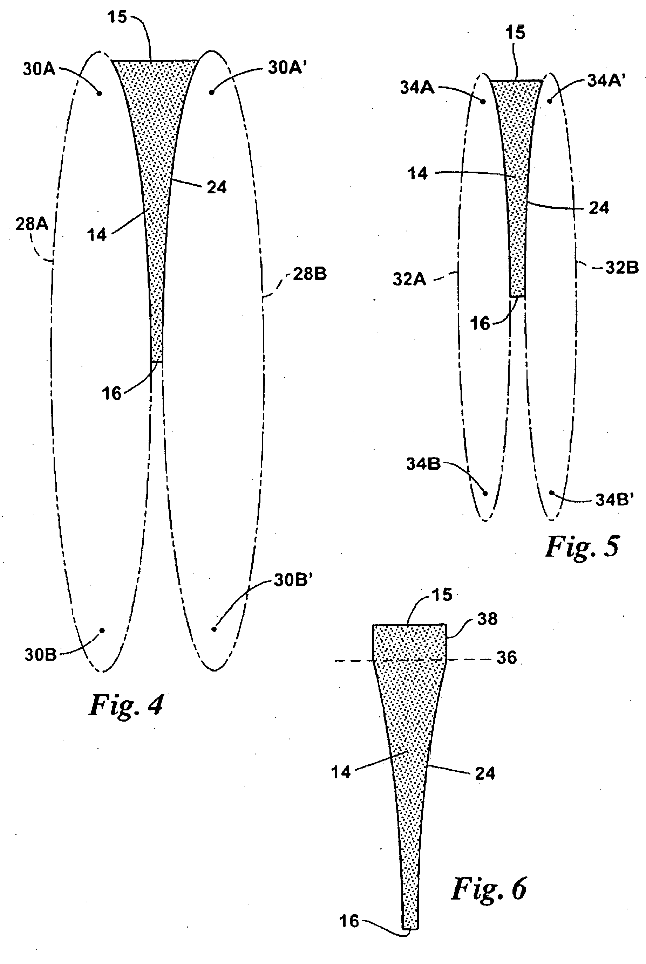

Referring to Figure 4, an embodiment of the invention is illustrated. In this figure diagrammatically illustrated is a shaft working portion of an endodontic file that has the helical tapered surface 24 with a shaft active portion proximal end 15 and a distal end 16, all as described with reference to Figure 2. In Figure 4 however the profile configuration of the external tapered shape 24 is defined to have a substantial elliptical conformity. To illustrate this, an ellipse 28 as shown in dotted outline provides the geometrical shape of the external profile surface of the file working portion 14. Ellipse 28 is a geometrical figure created by the locus of points in which each point is at the sum of the distance from two fixed points 30A and 30B. An identical or mirror image of the ellipse 28A is illustrated in 28B formed by dotted lines and having fixed points 30A' and 30B'. Thus the shaft working portion profile 14 has a taper that varies with substantial elliptical conformity. In Figure 4 the working portion 14 that has at least one cutting / scraping edge thereon (not seen) has a taper defined by the ellipses 28A and 28B. Thus, the external taper shape 24 is a continuously varying concavity wherein the variation in concavity is defined in conformity with a pre-established elliptical relationship.

Figure 5 is an illustration like Figure 4 in which elliptical boundaries 32A and 32B are formed with respect to fixed points 34A and 34B. Thus, Figure 5 shows a shaft working portion profile 14 having an external tapered shape 24 with a substantial elliptical conformity in which the ellipses defining the conformity are of relatively flatter geometrical configuration as compared to that of Figure 4.

Figure 6 illustrates another alternate embodiment in which the external tapered shape 24 extending from distal end 16 towards the shaft active portion proximal end 15 terminates at a shape change demarcation 36 that is a selected distance from distal end 16 to shape change demarcation 36. The external tapered shape 24 is of elliptical configuration the same as in Figures 4 and 5. However, the ellipses defined in the geometrical shape of the tapered surface 24 are not shown in Figure 6. Between the shape change demarcation 36 and the shaft active portion proximal end 15 is a short length of the shaft working surface that is a cylindrical and / or frusto-conical - that is, the secondary shape of surface 38 is different than that of the shape of the surface that exists from distal end 16 to the shape change demarcation 36 since the surface 38 does not have an external surface that is concave. Figure 6 therefore illustrates the concept that the shape of a dental file according to the principles of this invention may have a first portion extending from or adjacent to the proximal end 16 in the direction towards the shaft working portion proximal end that is related to concavity defined by changing radii. Figures 4 and 5 illustrate that this changing radii can be defined in conformity to elliptical shape. The significance of Figure 6 is the illustration that the configuration of the endodontic file shaft working portion can be an amalgamation of shapes, in some of which the radius of concavity is defined by substantial elliptical conformity.

Endodontic files are frequently designed as sets since in cleaning and shaping a root canal an endodontist usually starts with a file having a selected diameter and then switches to different files in the set as the shape of the root canal changes. The present invention can be provided to practitioners in sets of two or more files. Each file preferably having a different profile. One technique is to select a smaller diameter file in the set and sequentially select larger diameter files as the root canal is enlarged.

While the invention has been described with a certain degree of particularity, it is manifest that many changes may be made in the details of construction and the arrangement of components without departing from the scope of this disclosure. It is understood that the invention is not limited to the embodiments set forth herein for purposes of exemplification, but is to be limited only by the scope of the attached claim or claims.

**Claims**

1.  A dental instrument for endodontic applications comprising:

    an elongated shaft having a proximal end (12) and a reduced diameter distal end (16) and a tapered working portion (14) extending from said proximal to said distal end (16), the shaft working portion (14) having at least one cutting/scraping edge (22), the taper of the shaft working portion (14) being defined by an initial relatively large radius of concavity (R) at said distal end (16) and of continually reduced radius of concavity (R) terminating in a final relatively small radius of concavity (R) adjacent said proximal end (12); **characterised in that** said continually reduced radius of concavity (R) varies with substantial elliptical conformity.

2.  A dental instrument according to Claim 1 wherein said concavity of a major portion of said shaft working portion (14) varies with substantial elliptical conformity and a reduced portion is defined by secondary parameters.

3.  A set of at least two dental instruments for endodontic applications, each instrument comprising:

    an elongated shaft having a proximal end (12) and a reduced diameter distal end (16) and a tapered working portion extending from said proximal end (12) to said distal end (16), the shaft working portion (14) having at least one cutting/scraping edge (22), the taper of the shaft working portion (14) being defined by an initial relatively large radius of concavity (R) at said distal end (16) and of continually reduced radius of concavity (R) terminating in a final relatively small radius of concavity (R) adjacent said proximal end (12); and wherein each instrument has a different rate of continually reduced radii of concavity;

    **characterised in that**
    said continually reduced radius of concavity (R) varies with substantial elliptical conformity.

4.  A set of dental instruments according to Claim 3 wherein each said instrument has about the same diameter at said distal end (16).

5.  A set of dental instruments according to Claim 3 wherein said concavity of a major portion of said shaft working portion varies with substantial elliptical conformity and a reduced portion is defined by secondary parameters.

**Patentansprüche**

1.  Dentalinstrument für endodontische Anwendungen, welches Folgendes aufweist:

    einen länglichen Schaft, welcher ein proximales Ende (12) und ein distales Ende (16) mit verringertem Querschnitt, sowie einen sich verjüngenden Arbeitsabschnitt (14) aufweist, welcher sich von dem proximalen Ende zu dem distalen Ende (16) erstreckt, wobei der Arbeitsabschnitt (14) des Schafts mindestens eine Schneid-/Schürfkante (22) aufweist, wobei die Verjüngung des Schaft-Arbeitsabschnitts (14) durch einen relativ großen Anfangs-Wölbungsradius (R) an dem distalen Ende (16) und durch einen sich konstant verringerten Wölbungsradius (R), welcher in einem relativ kleinen End-Wölbungsradius (R) neben dem proximalen Ende (12) endet, bestimmt wird; **dadurch gekennzeichnet, dass** der konstant verringerte Wölbungsradius (R) mit erheblicher elliptischer Gleichförmigkeit variiert.

**2.** Dentalinstrument nach Anspruch 1, **dadurch gekennzeichnet, dass** die Wölbung eines Hauptabschnitts des Schaft-Arbeitsabschnitts (14) mit beachtlicher elliptischer Gleichförmigkeit variiert und ein verringerter Abschnitt durch sekundäre Parameter bestimmt wird.

**3.** Ein Satz aus mindestens zwei Dentalinstrumenten für endodontische Anwendungen, wobei jedes Instrument Folgendes aufweist:

einen länglichen Schaft, welcher ein proximales Ende (12) und ein distales Ende (16) mit verringertem Durchmesser sowie einen sich verjüngenden Arbeitsabschnitt aufweist, welcher sich von dem proximalen Ende (12) zu dem distalen Ende (16) erstreckt, wobei der Schaft-Arbeitsabschnitt (14) mindestens eine Schneid-/Schürfkante (22) aufweist, wobei die Verjüngung des Schaft-Arbeitsabschnitts (14) durch einen relativ große Anfangs-Wölbungsradius (R) an dem distalen Ende (16) und durch einen sich konstant verringerten Wölbungsradius (R), welcher in einem relativ kleinen End-Walbungsradius (R) neben dem proximalen Ende (12) endet, bestimmt wird: und wobei jedes Instrument einen unterschiedlichen Anteil an konstant verringerten Wölbungsradien (R) aufweist;
**dadurch gekennzeichnet, dass**
der konstant verringerte Wölbungsradius (R) mit erheblicher elliptischer Gleichförmigkeit variiert.

**4.** Dentalinstrumenten-Satz nach Anspruch 3, **dadurch gekennzeichnet, dass** jedes Instrument in etwa denselben Durchmesser am distalen Ende (16) aufweist.

**5.** Dentalinstrumenten-Satz nach Anspruch 3, **dadurch gekennzeichnet, dass** die Wölbung eines Hauptabschnitts des Schaft-Arbeitsabschnitts mit beachtlicher elliptischer Gleichförmigkeit variiert und ein verringerter Abschnitt durch sekundäre Parameter definiert ist.

**Revendications**

**1.** Instrument dentaire pour des applications endodontiques comprenant:

un arbre oblong ayant une extrémité proximale (12) et une extrémité distale (16) d'un diamètre réduit et une portion travaillante conique (14) s'étendant de ladite extrémité proximale à ladite extrémité distale (16), la portion travaillante d'arbre (14) ayant au moins un bord de coupe/raclage (22), la conicité de la portion travaillante d'arbre (14) étant définie par un rayon de concavité initial (R) relativement grand à ladite extrémité distale (16) et par un rayon de concavité (R) continuellement réduit se terminant par un rayon de concavité final (R) relativement petit adjacent à ladite extrémité proximale (12); **caractérisé en ce que**
ledit rayon de concavité (R) continuellement réduit varie selon une conformité sensiblement elliptique.

**2.** Instrument dentaire selon la revendication 1, dans lequel ladite concavité d'une portion majeure de ladite portion travaillante d'arbre (14) varie avec une conformité sensiblement elliptique, et une portion réduite est définie par des paramètres secondaires.

**3.** Ensemble d'au moins deux instruments dentaire pour des applications endodontiques, chaque instrument comprenant:

un arbre oblong ayant une extrémité proximale (12) et une extrémité distale (16) d'un diamètre réduit et une portion travaillante conique s'étendant depuis ladite extrémité proximale (12) à ladite extrémité distale (16), la portion travaillante d'arbre (14) ayant au moins un bord de coupe/raclage (42), la conicité de la portion travaillante d'arbre (14) étant définie par un rayon de concavité initial (R) relativement grand à ladite extrémité distale (16) et par un rayon de concavité (R) continuellement réduit se terminant par un rayon de concavité final (R) relativement petit adjacent à ladite extrémité proximale (12); et où chaque instrument possède un taux différent de rayons de concavité continuellement réduits; **caractérisé en ce que**
ledit rayon de concavité (R) continuellement réduit varie avec une conformité sensiblement elliptique.

**4.** Ensemble d'instruments dentaires selon la revendication 3, dans lequel chaque instrument précité a environ le même diamètre à ladite extrémité distale (16).

**5.** Ensemble d'instruments dentaires selon la revendication 3, dans lequel ladite concavité d'une portion majeure de ladite portion travaillante d'arbre varie avec une conformité sensiblement elliptique, et une portion réduite est définie par des paramètres secondaires.

*Fig. 1*

*Fig. 3*

*Fig. 2*

*Fig. 2A*

Fig. 4

Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 1067015 A
- US 1307446 A
- US 2902763 A
- US 4260379 A
- US 4443193 A
- US 4536159 A
- US 4538989 A
- US 4738616 A
- US 4836780 A
- US 4934934 A
- US 4971556 A
- US 5017137 A
- US 5017138 A
- US 5026284 A
- US 5219284 A
- US 5257934 A
- US 5380200 A
- US 5464362 A
- US 5503554 A
- US 5658145 A
- US 5676541 A
- US 5692902 A
- US 5735689 A
- US 5746597 A
- US 5842862 A
- US 5873719 A
- US 5897316 A
- US 5902106 A
- US 5921775 A
- US S938440 A
- US 5941760 A
- US 5975899 A
- US 5980250 A
- US 6012921 A
- US 6074209 A
- US 6217335 B
- US 6267592 B
- US 6296485 B
- US 6299445 B
- US 6312261 B
- US 6315558 B
- US 6390819 B
- US 6419488 B
- US 6443730 B
- US 6514076 B
- US 6520774 B
- US 6644972 B
- US 6712611 B
- US 6746245 B
- US 20030077553 A
- US 20040146832 A
- US 20040121283 A
- US 20040058297 A
- US 20040043357 A
- US 20040023186 A
- US RE34439 E
- EP 0780099 A2